# FASCICULE DE BREVET EUROPEEN

(11) **EP 3 333 406 B1**
(45) Date de publication et mention de la délivrance du brevet: **17.02.2021**
(21) Numéro de dépôt: 17205504.8
(22) Date de dépôt: 05.12.2017
(51) Int. Cl.: F02M 35/10, F02M 35/104, F02B 29/04, F28F 9/04, F16J 15/02, F28F 9/00, F28F 9/007

(54) **RÉPARTITEUR D'ADMISSION AVEC UN ÉCHANGEUR DE CHALEUR INTÉGRÉ**
ANSAUGKRÜMMER MIT EINEM INTEGRIERTEN WÄRMETAUSCHER
INTAKE MANIFOLD WITH BUILT-IN HEAT EXCHANGER

(30) Priorité: 07.12.2016 FR 1662046
(43) Date de publication de la demande: 13.06.2018
(73) Titulaire: Sogefi Air & Cooling (SAS), 78280 Guyancourt (FR)
(72) Inventeur: BURCKEL, François, 25130 Villers-Le-Lac (FR); BECKER, Nicolas, 68320 Holtzwihr (FR); ANCEL, Benoît, 68420 Eguisheim (FR); ANDRES, Michel, 68100 Mulhouse (FR)
(74) Mandataire: Cabinet Nuss

(56) Documents cités:
- EP-A1- 2 706 209
- EP-A2- 0 578 916
- WO-A1-2015/149951
- DE-A1-102008 061 759
- DE-A1-102009 049 455
- DE-A1-102013 006 956

## Description

La présente invention concerne le domaine des équipements techniques des véhicules automobiles à moteur à combustion interne, plus particulièrement les éléments et composants formant la ligne d'admission des gaz comburants de ces moteurs.

L'invention a, dans ce contexte, pour objet un répartiteur ou collecteur d'admission intégrant un échangeur de chaleur.

De très nombreuses réalisations de répartition ou collecteurs d'admission sont connues dans l'état de la technique. Il en est de même pour les échangeurs de chaleur, en particulier ceux destinés à refroidir l'air suralimenté ou encore ceux destinés à refroidir les gaz EGR avant leur mélange avec l'air frais, en vue de l'injection du mélange gazeux résultant dans les cylindres.

Une demande constante, voire une contrainte constructive permanente, dans le domaine de la fabrication automobile, est le gain de place en particulier sous le capot et dans l'environnement du moteur.

Dans le cadre de cette problématique générale, une tendance forte vise l'intégration de plusieurs fonctions complémentaires, associées et/ou consécutives dans un même module ou une même unité structurel(le).

Ainsi, il a été proposé depuis plusieurs années de combiner les fonctions "répartiteur d'admission" et "échangeur de chaleur" dans un même module et différentes solutions de réalisation de ce type de module unitaire et multifonctionnel sont déjà connues.

Dans l'état de la technique sont notamment connus des répartiteurs d'admission pour moteur à combustion interne intégrant au moins un échangeur de chaleur monté dans le volume intérieur dudit collecteur, c'est-à-dire encapsulé hermétiquement.

Il en résulte que ledit volume intérieur est séparé en deux compartiments situés de part et d'autre dudit échangeur, et que le flux de gaz circulant dans le collecteur traverse ledit échangeur pour passer d'un premier desdits compartiments vers le second compartiment.

Deux problèmes majeurs se posent dans ce type de construction composite (module combiné : répartiteur + échangeur intégré), à savoir, le maintien rigide de l'échangeur dans le corps du répartiteur et la nécessité d'étanchéifier l'interface périphérique entre l'échangeur et le corps du répartiteur (volume interstitiel), afin de forcer le flux gazeux à traverser l'échangeur (c'est-à-dire traverser la formation ou le faisceau de tubes ou d'ailettes dans lesquel(le)s circule le flux gazeux à refroidir en circulant autour et entre ces tubes ou ailettes) et ainsi optimiser l'action de ce dernier.

Conformément à un premier mode de réalisation connu de collecteurs d'admission formant modules combinés, par exemple illustrés par les documents US 2011/0088663 et WO 2011/061311, l'échangeur intégré est réalisé in situ en coopération avec le corps du collecteur, certaines parties servant simultanément à l'échangeur et au collecteur.

Dans ce premier type de réalisation, les parties fonctionnelles de l'échangeur sont assemblées avec les parois du collecteur en réalisant une double étanchéité, à savoir l'étanchéité de l'échangeur lui-même et l'étanchéité de ce dernier vis-à-vis du collecteur.

Il en résulte une complexité de construction et des contraintes de fabrication et de montage très élevées, résultant en un coût de revient important.

En accord avec un second mode de réalisation connu, par exemple du document EP-A-2 722 516, l'échangeur est pourvu d'un cadre périphérique qui est pris en sandwich lors de l'assemblage des deux parties du boîtier du répartiteur. Le cadre assure ainsi la fixation rigide de l'échangeur dans le boîtier et une étanchéité périphérique autour de l'échangeur.

Néanmoins, l'opération d'assemblage est délicate à réaliser et des contraintes importantes agissent sur le plan d'assemblage (réalisation d'une fixation mécanique et d'une double étanchéité au niveau de ce plan).

Selon un troisième mode de réalisation connu, l'échangeur de chaleur est réalisé séparément puis monté dans le corps du répartiteur lorsque ce dernier est déjà en grande partie assemblé (cf. WO 2008/061850, DE 10 2007 030 464, WO 2009/027492 ou FR 2 645 209) ou en étant intégré en cours d'assemblage des différentes parties du répartiteur (cf. FR 2 936 572, WO 2011/064087 ou FR 2 908 833). Dans ce second type de réalisations connu, le maintien en position de l'échangeur est réalisé par blocage dans le corps du répartiteur ou par solidarisation avec la paroi de ce dernier, éventuellement au moyen d'une plaque ou d'une traverse, l'étanchéité du répartiteur étant gérée de manière indépendante.

Par ailleurs, sont également connues différentes réalisations de moyens d'étanchéité périphériques autour de l'échangeur (barrière étanche entre les faces extérieures de l'échangeur et la paroi interne du boîtier du répartiteur).

Ainsi, les documents GB 1 540 465 et DE 10 2008 061 759 divulguent des joints linéaires à section en X, à priori d'un seul tenant, rapportés sur l'échangeur ou entre les surfaces à étancher interstitiellement. Toutefois, la nature du montage de l'échangeur dans le boîtier n'est pas indiqué dans ces documents, ni l'interaction entre les fonctions de montage et d'étanchéité.

Enfin, par le document EP 2 715 267, on connait un répartiteur intégrant un échangeur avec réalisation d'une étanchéité périphérique par l'intermédiaire d'un joint en U en plastique rigide. Ce dernier enveloppe des bords saillants du carter de l'échangeur, qui assurent le guidage lors de l'introduction et le maintien rigide après introduction de l'échangeur dans le boîtier (par coopération avec des gorges de réception formées dans les parois du répartiteur). Les fonctions de montage rigide et d'étanchéité périphérique sont par conséquent assurées par les mêmes moyens et dans les mêmes régions. En outre, le joint en U doit être enfilé de manière fastidieuse sur l'échangeur lors de l'assemblage du répartiteur.

Aussi, le document DE 10 2013 006956 A1 divulgue un collecteur d'admission similaire avec différents moyens d'étanchéité périphériques.

La présente invention a pour but de proposer une solution constructive de répartiteur intégrant un échangeur, dans laquelle les fonctions de montage et d'étanchéité périphérique autour de l'échangeur sont différenciées structurellement et spatialement, tout en fournissant une étanchéité s'adaptant aux variations dimensionnelles différenciées de l'échangeur et du répartiteur (coefficients de dilatation thermiques différents), facile et rapide à monter, pouvant éventuellement être réalisée en plusieurs matériaux adaptés au lieu d'implantation et pouvant avantageusement être assemblée de manière résistante et précise avec l'échangeur, avant même son montage dans le répartiteur.

De plus, l'échangeur intégré structurellement dans le répartiteur ne devrait pas être tributaire d'un support de montage formant également couvercle de fermeture pour le boitier du répartiteur, de manière à permettre un montage plus flexible dans ce dernier.

A cet effet l'invention a pour objet un répartiteur ou collecteur d'admission d'air suralimenté pour moteur à combustion interne, selon la revendication 1, comprenant un échangeur de chaleur dont le corps a une forme générale parallélépipédique, qui est monté dans le boîtier du dit répartiteur et qui est destiné à être exposé au flux gazeux traversant ledit boîtier,
ledit échangeur comportant ou étant solidaire d'une plaque ou d'une traverse de support et de fixation, rapportée sur ou formant une face du corps de l'échangeur et assurant son montage rigide dans ce boîtier,
ledit échangeur étant positionné dans ledit boîtier avec formation d'un volume interstitiel entre eux, enveloppant sensiblement le corps dudit échangeur, et des moyens d'étanchéité périphériques étant rapportés sur le corps de l'échangeur et sur la plaque ou traverse de support et de fixation de manière à former une barrière étanche circonférentielle sensiblement continue entre ces derniers et le boîtier du répartiteur, divisant périphériquement le volume interstitiel en deux, selon un plan sensiblement perpendiculaire à la direction de circulation du flux gazeux traversant ledit échangeur,
le plan de subdivision du volume interstitiel est distinct du plan principal de la plaque ou de la traverse de support et de fixation, et avantageusement incliné et préférentiellement sensiblement perpendiculaire par rapport à ce dernier, répartiteur caractérisé
en ce que les moyens d'étanchéité périphériques sont constitués par deux composantes complémentaires périphériquement par aboutement reliées entre elles et solidarisées avec l'échangeur, à savoir, une première composante sous la forme d'un joint en U rapporté par prémontage sur les trois faces du corps de l'échangeur non associées à la traverse ou à la plaque de support et de fixation, et une seconde composante sous la forme d'un joint sensiblement linéaire rapporté par prémontage sur la face associée à ladite traverse ou plaque, ledit joint sensiblement linéaire étant assemblé mécaniquement, au niveau de ses deux extrémités longitudinales opposées, aux extrémités libres des deux branches du joint en U,
en ce que les deux joints sont assemblés mutuellement, au niveau de leur deux zones de liaisonnement, par des moyens complémentaires d'assemblage, coopérants entre eux par engagement mécanique avec enclenchement, clippage ou verrouillage élastique, et,
en ce que les deux joints formant les deux composantes des moyens d'étanchéité périphériques sont également reliées mécaniquement à la traverse ou plaque de support de de fixation.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue éclatée en perspective d'un répartiteur d'admission intégrant un échangeur de chaleur, pour former un module multifonctionnel selon un mode de réalisation préféré de l'invention ;
la figure 2 est une vue en élévation et en coupe, selon un plan perpendiculaire au plan contenant les moyens d'étanchéité périphériques formés par un joint en U et un joint linéaire, du répartiteur de la figure 1 à l'état assemblé ;
la figure 3 est une vue en perspective d'un échangeur thermique tel que ressortant des figures 1 et 2, avant montage des moyens d'étanchéité périphérique ;
les figures 4A et 4B sont des vues en perspective de l'échangeur de la figure 3, les moyens d'étanchéité périphériques étant en place ;
la figure 5 est une vue partielle de la partie inférieure de l'objet représenté figure 3 ;
la figure 6 est une vue du détail A de la figure 4B, à une échelle différente ;
la figure 7A est une vue partielle et en perspective de dessous de l'objet de la figure 6, le joint linéaire inférieur n'étant pas représenté ;
la figure 7B est une vue partielle de dessous, suivant la direction B de l'objet de la figure 6 ;
la figure 7C est une vue latérale partielle, suivant la direction C de l'objet de la figure 6, la partie inférieure du joint en U étant enlevée ;
la figure 8 est une vue partielle du détail D de l'objet de la figure 2;
les figures 9A à 9C sont des vues similaires à celles de la figure 8, illustrant la mise en œuvre de variantes constructives du joint périphérique ;

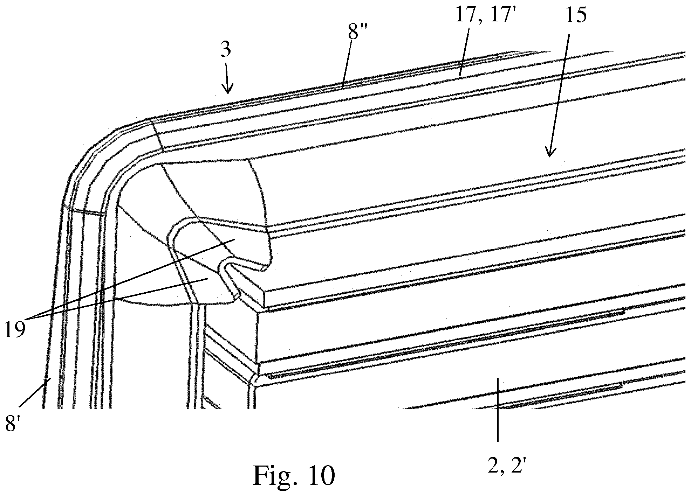

la figure 10 est une vue du détail E de la figure 4A, à une échelle différente ;

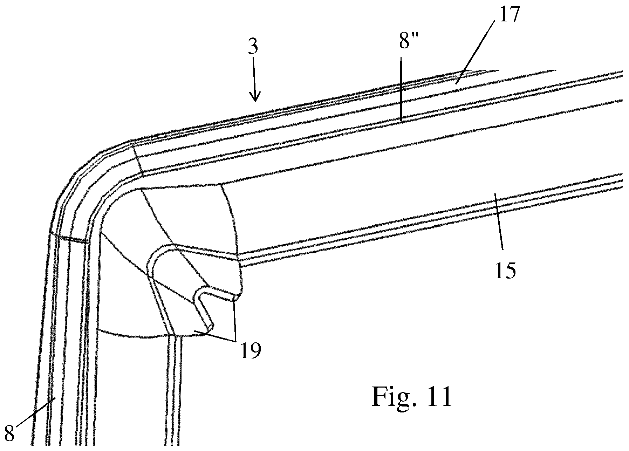

la figure 11 est une vue similaire à celle de la figure 10 du joint seul, et,
la figure 12 est une vue du détail G de la figure 3, à une échelle différente.

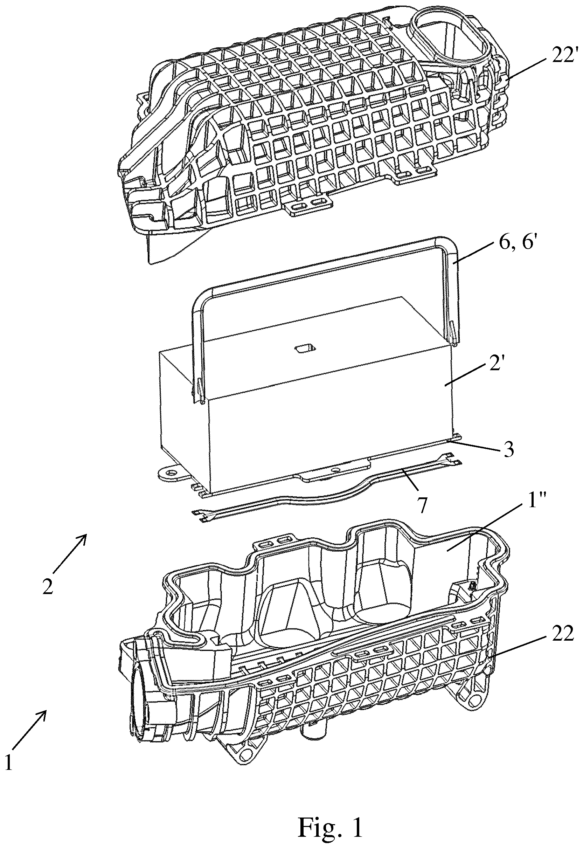

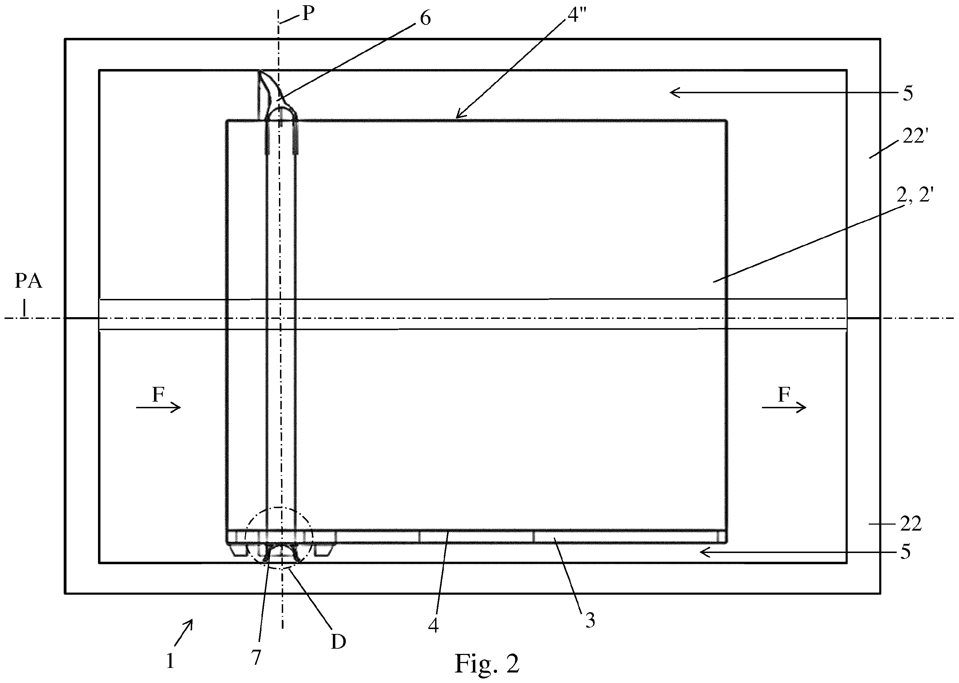

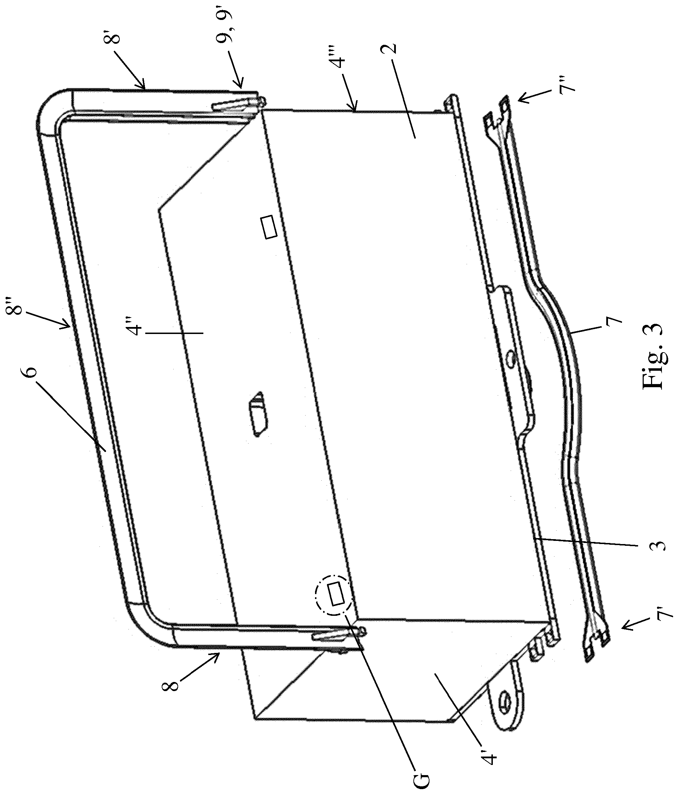

Les figures 1 et 2, et partiellement les figures 3, 4, 8 et 9, illustrent un répartiteur ou collecteur d'admission pour moteur à combustion interne, comprenant un échangeur 2 de chaleur dont le corps 2' a une forme générale parallélépipédique, qui est monté dans le boîtier 1' dudit répartiteur 1 et qui est destiné à être exposé au flux gazeux F traversant ledit boîtier 1'.

Cet échangeur 2 comporte ou est solidaire d'une plaque ou d'une traverse 3 de support et de fixation, rapportée sur ou formant une face 4 du corps 2' de l'échangeur 2 et assurant son montage rigide dans ce boîtier 1'.

Cet échangeur 2 est positionné dans ledit boîtier 1' avec formation d'un volume interstitiel 5 entre eux, entourant sensiblement le corps 2' dudit échangeur 2, et des moyens 6, 7 d'étanchéité périphériques sont rapportés sur le corps 2' de l'échangeur 2 et sur la plaque ou traverse de support et de fixation 3 de manière à former une barrière étanche circonférentielle sensiblement continue entre ces derniers et le boîtier 1' du répartiteur 1, divisant périphériquement le volume interstitiel 5 en deux, avantageusement selon un plan P sensiblement perpendiculaire à la direction de circulation du flux gazeux F traversant ledit échangeur 2.

Le boitier 1' peut, par exemple, être formé par l'assemblage des deux parties (inférieure 22 et supérieure 22') en forme de coques (figure 1).

Conformément à l'invention, il est prévu que le plan P de subdivision du volume interstitiel 5 est distinct du plan principal de la plaque ou de la traverse de support et de fixation 3, et avantageusement incliné et préférentiellement sensiblement perpendiculaire par rapport à ce dernier.

De plus, les moyens d'étanchéité périphériques sont constitués par deux composantes complémentaires 6 et 7 reliées entre elles et solidarisées avec l'échangeur 2, à savoir, une première composante 6 sous la forme d'un joint en U rapporté sur les trois faces 4', 4", 4'" du corps 2' de l'échangeur 2 non associées à la traverse ou à la plaque de support et de fixation 3, et une seconde composante 7 sous la forme d'un joint sensiblement linéaire rapporté sur la face 4 associée à ladite traverse ou plaque 3, ledit joint sensiblement linéaire 7 étant aboutant et assemblé mécaniquement, au niveau de ses deux extrémités longitudinales opposées 7', 7", avec les extrémités libres 9 des deux branches 8, 8' du joint en U 6.

Grâce à ces dispositions, les fonctions de montage et d'étanchéisation périphérique de l'échangeur sont clairement différenciées et désaccouplées entre elles et une étanchéité est fournie au niveau des quatre faces ou cotés périphériques de l'échangeur 2 situé(e)s en regard de la paroi interne 1" du boitier 1' le recevant.

En outre, une constitution en deux parties de l'étanchéité périphérique continue 6, 7 autorise une fabrication et un montage aisés, tout en limitant le nombre de composantes élémentaires à assembler et à prémonter sur l'échangeur 2 avant son installation dans ledit boitier 1'.

Cette décomposition constructive de l'étanchéité périphérique continue permet également, compte tenu notamment du placement orienté de l'échangeur 2 dans le répartiteur 1, avec définition d'un côté supérieur et d'un côté inférieur, de mettre en œuvre le cas échéant un profil de joint différent au niveau de ce côté inférieur, sous la plaque ou traverse support 3, plus adapté à cette région.

Les profils des joints en U 6 et linéaire 7 sont bien entendu adaptés pour assurer l'étanchéité malgré les tolérances de fabrication et les dilatations thermiques ou sous pression du corps 2' de l'échangeur 2 et du boitier 1' du répartiteur 1.

En vue de faciliter leur liaisonnement, sans mise en œuvre de pièce additionnelle ou d'outils ou de procédé technologique particulier, les deux joints sont préférentiellement assemblés mutuellement, au niveau de leur deux zones de liaisonnement, par des moyens complémentaires d'assemblage 10, 11, coopérants entre eux par engagement mécanique avec enclenchement, clippage ou verrouillage élastique.

Avantageusement, le joint en U 6 comporte, au niveau des extrémités libres 9 des deux branches 8, 8' du corps 6' en U, des crans, des crochets, des harpons ou des formations proéminentes accrochantes analogues 10, et le joint linéaire 7 comporte à ses deux extrémités opposées 7' et 7" des sites d'accrochage 11 latéralement saillants, en particulier des anses, des œillets ou des formations ajourées analogues, aptes et destinés à recevoir les formations proéminentes 10 des extrémités 9 du joint en U 6 pour réaliser par coopération mutuelle des liaisons mécaniques verrouillées.

Afin d'autoriser un prémontage simple et sûr des joints 6 et 7 sur le corps 2' de l'échangeur 2, de regrouper géographiquement les sites de solidarisation et de pouvoir effectuer le cas échéant simultanément les opérations d'assemblage et de prémontage, les deux joints 6 et 7 formant les deux composantes des moyens d'étanchéité périphériques sont également reliées mécaniquement à la traverse ou plaque de support et de fixation 3, préférentiellement au niveau de leurs extrémités 7, 7", 9 mutuellement assemblées, le joint en U 6 étant avantageusement maintenu en appui sous pression contre les faces 4', 4", 4'" du corps 2 de l'échangeur 2 par le biais de cette liaison.

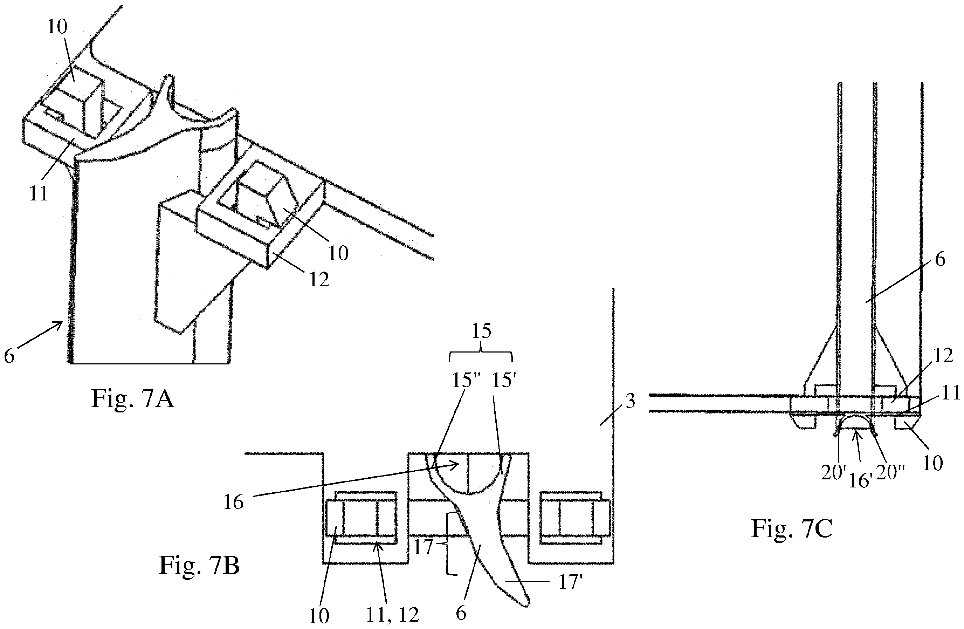

En accord avec un mode de réalisation constructive très préféré, ressortant notamment des figures 3, 4, 6 et 7, la traverse ou plaque de support et de fixation 3 comporte des formations ajourées 12, saillantes latéralement et coïncidentes avec les formations ajourées 11 des extrémités opposées 7' et 7" du joint linéaire 7, telles que des anses, des œillets ou analogues, les formations proéminentes accrochantes 10 des extrémités 9 des branches 8, 8' du joint en U 6 venant en engagement par emboîtement traversant et avec verrouillage par enclenchement, clippage ou déformation élastique, avec les formations ajourées 11 et 12 superposées précitées, le joint linéaire 7 étant ainsi pressé contre la traverse ou la plaque 3 au moins au niveau et à proximité desdites formations ajourées superposées 11 et 12.

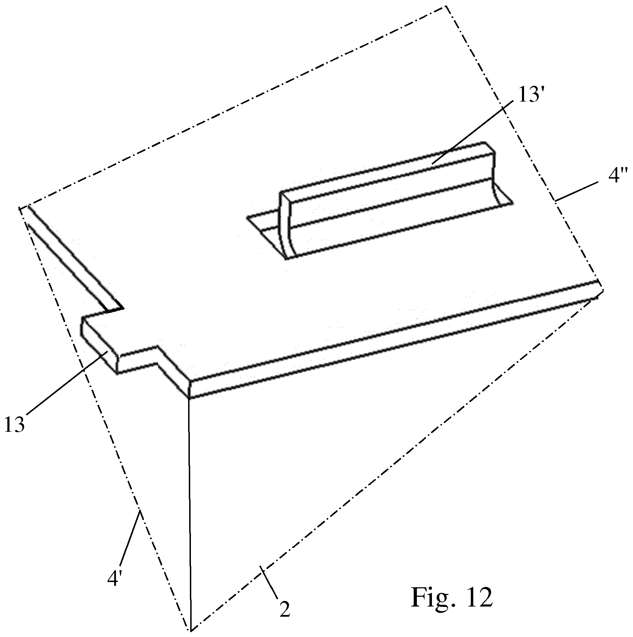

En vue d'assujettir l'étanchéité 6, 7 sur le corps 2' et éviter son déplacement, ledit 2' peut être pourvu, comme le montrent à titre d'exemple les figures 3 et 12, sur au moins une de ses faces extérieures concernées 4', 4", 4"', de moyens 13, 13' de calage et/ou de maintien pour le joint en U 6, tels que par exemple des languettes ou analogues.

Ces moyens de calage peuvent, par exemple, consister en des ailes, des lèvres ou des languettes saillantes 13, 13', sous forme de prolongements ou de crevées dudit corps 2' ou de son enveloppe extérieure.

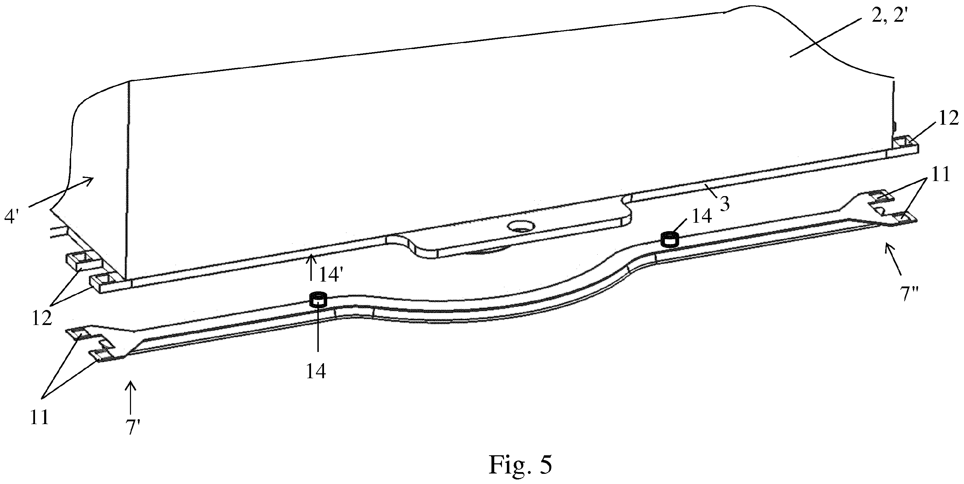

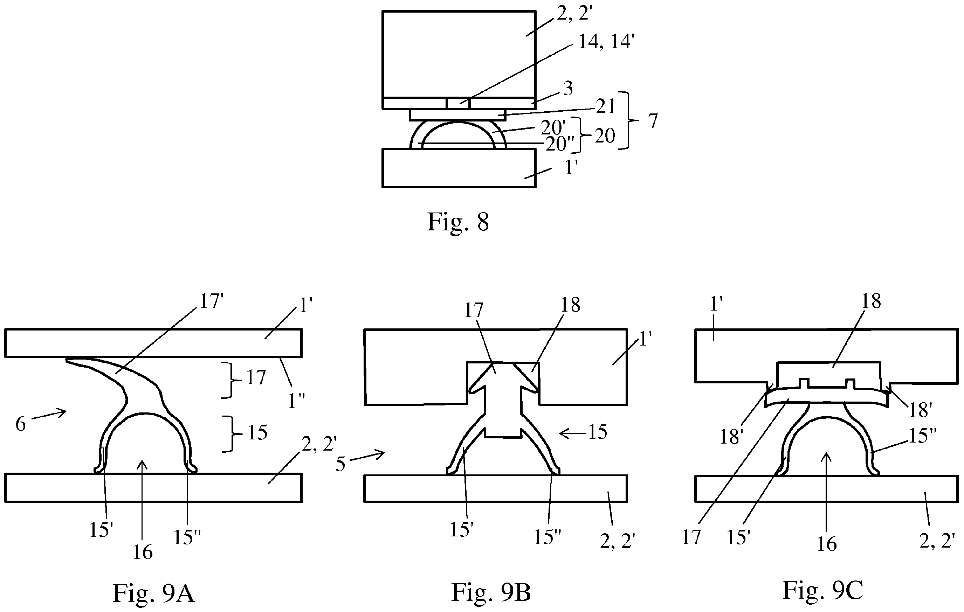

De manière similaire, il peut être prévu que la traverse ou la plaque de support et de fixation 3, d'une part, et le joint linéaire 7, d'autre part, sont pourvus de moyens 14, 14' mutuellement coopérants d'indexation, et éventuellement de solidarisation, tels que par exemple des couples [ergot 14 / orifice borgne 14'] (voir figures 5 et 8).

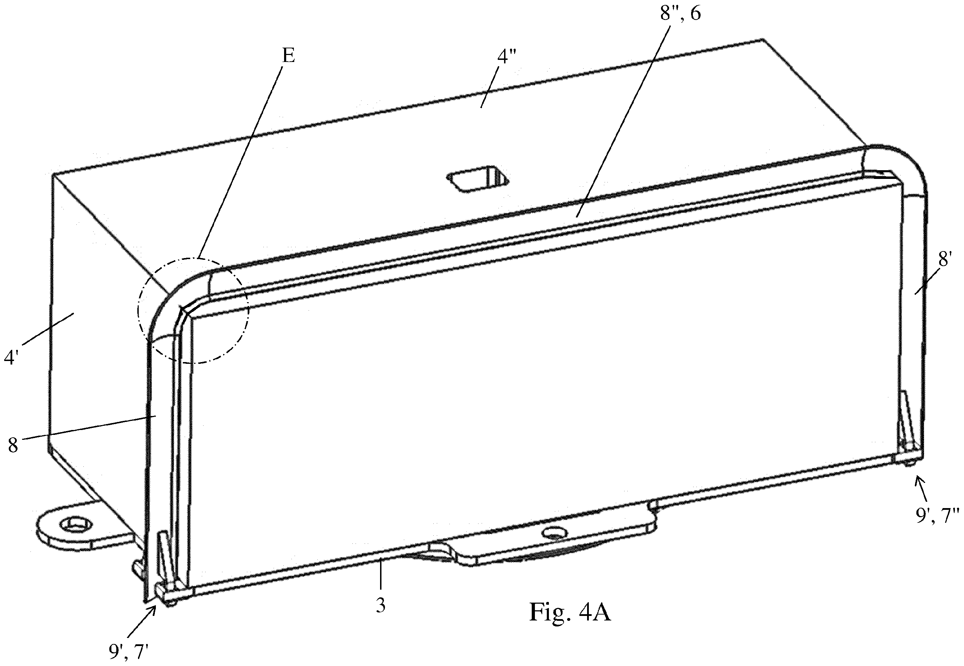

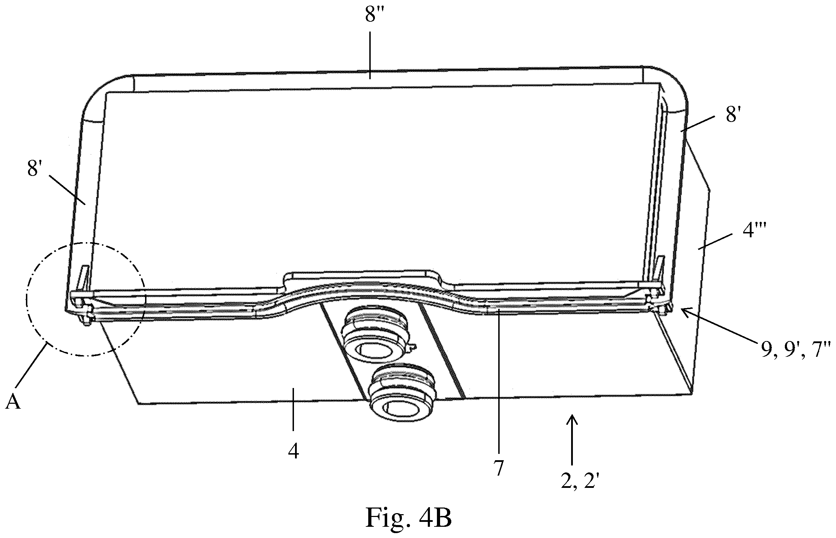

Afin d'assurer une continuité d'étanchéité au niveau des zones de coins ou d'angles inférieurs du corps 2' de l'échangeur 2, les bords terminaux 9' des extrémités libres 9 des branches 8, 8' du joint en U 6 sont situées au-delà de la face 4 de la plaque ou traverse de support et de fixation 3 portant le joint linéaire 7 et se raccordent par aboutement avec les extrémités opposées 7', 7" dudit joint linéaire 7 (voir figures 4B, 6 et 7).

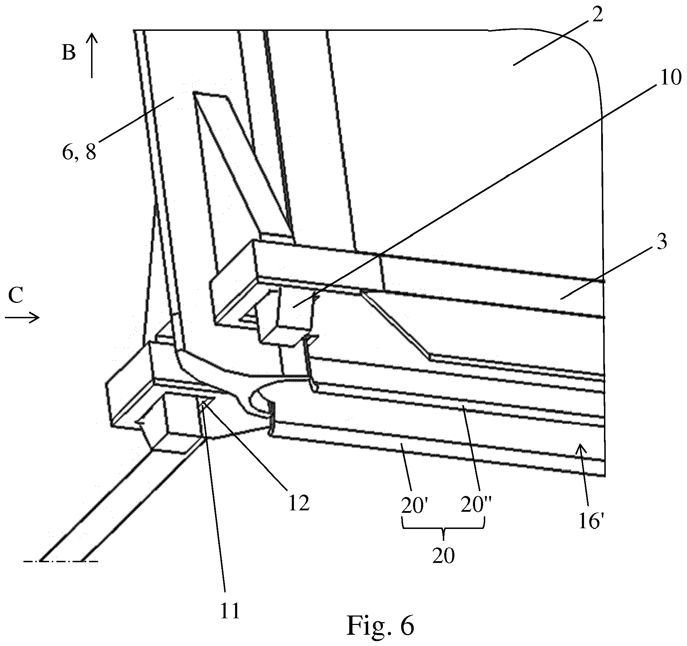

Préférentiellement, et comme l'illustrent les figures 6, 7, 9A, 9B et 9C à titre de variantes constructives, chacun des trois segments constitutifs 8, 8', 8'" du joint en U 6 est constitué, vu en coupe transversale, d'une part, d'une première partie 15 venant en appui sous pression sur la face 4', 4", 4'" correspondante en regard du corps 2' de l'échangeur 2 et comportant deux ailes longitudinales 15' et 15" mutuellement divergentes, préférentiellement arquées ou courbes en section transversales, et formant avec lesdites faces 4', 4", 4'" des portions de canaux 16 et, d'autre part, une seconde partie 17 venant en appui sur la paroi interne 1" du boîtier 1' de l'échangeur 1 et comportant une formation flexible longitudinale de contact 17' coopérant de manière étanche avec une portion de surface plane, une rainure 18 ou des nervures 18' de ladite paroi interne 1".

Pour garantir l'étanchéité au niveau des régions angulaires reliant les faces latérales 4' et 4'" à la face supérieure 4" de l'échangeur 2, et s'adapter aux dispersivités constructives de ce dernier, il peut être prévu que le joint en U 6 comporte, au niveau des deux coins reliant deux à deux les trois segments constitutifs 8, 8', 8" de son corps 2', des lèvres latérales saillantes et souples 19, en forme de cornières, venant en appui intime sur le coin respectivement correspondant du corps 2' de l'échangeur 2.

Avantageusement, la seconde partie 17 du joint 6 présente une section similaire à la première partie du 20 du joint 7.

A tout le moins, il peut être prévu que les extrémités libres 9 des branches 8 et 8' du corps 6' du joint en U 6 obturent sensiblement les ouvertures opposées de la portion de canal 16' formée par la coopération du joint linéaire 7 avec la paroi interne 1" du boîtier 1' du répartiteur 1, les bords terminaux 9' desdites extrémités libres 9 venant en appui sur ladite paroi interne 1".

Avantageusement, le corps du joint linéaire 7 est constitué, d'une part, d'une première partie 20 venant en appui sous pression sur la paroi interne 1" du corps 1' du boîtier 1 et comportant deux ailes longitudinales mutuellement divergentes 20' et 20", préférentiellement arquées ou courbes en section transversale, et formant avec ladite paroi interne 1" une portion de canal 16', et, d'autre part, une seconde partie plane 21 en contact surfacique avec la traverse ou la plaque de support et de fixation 3.

Compte tenu de leurs positionnements de leurs rôles distincts, le corps 6' du joint en U 6 est réalisé en un matériau plus flexible, par exemple du thermoplastique élastomère, que le matériau constitutif du joint linéaire 7, par exemple en polyamide 66 non chargé.

En accord avec une construction pratique préférée, ressortant des figures 1 et 2, le boitier 1' est constitué de deux parties constitutives complémentaires 22 et 22', à savoir une partie supérieure 22 et une partie inférieure 22' assemblées au niveau de bords respectifs coopérants, définissant un plan d'assemblage PA incliné par rapport au plan de subdivision P, préférentiellement perpendiculaire à ce dernier, la partie inférieure de boîtier 22' comportant des sites de fixation pour la plaque ou la traverse de support et de fixation 3.

Avantageusement, le boîtier 1' est réalisé en matériau plastique, préférentiellement par assemblage étanche de deux parties 22 et 22' en forme de demi-coques en matériau thermoplastique.

L'invention concerne également un véhicule automobile à moteur à combustion interne, suralimenté ou non, comprenant ou non un circuit de recirculation des gaz EGR et comportant un système d'admission d'air avec un répartiteur ou collecteur d'admission d'air suralimenté. Ce véhicule est caractérisé en ce que le répartiteur est un répartiteur 1 tel que décrit ci-dessus, constituant un module multifonctionnel intégrant dans l'enceinte de son boîtier 1' au moins un échangeur de chaleur 2 dans les tubes, ailettes ou analogue du corps 2' duquel circule de l'air suralimenté.

Enfin, l'invention porte également sur un procédé de fabrication d'un répartiteur tel que décrit précédemment.

Ce procédé consiste à fournir les deux parties constitutives 22 et 22' d'un boîtier 1' de répartiteur 1, un échangeur de chaleur 2 pourvue d'une plaque 3 de support et de fixation, un joint en U 6 et un joint linéaire 7, à monter les deux joints 6 et 7 sur le corps 2' de l'échangeur 2, en verrouillant leur montage par enclenchement ou clippage et de manière à constituer une garniture d'étanchéité périphérique autour dudit corps 2', à disposer l'échangeur 2 ainsi équipé dans la partie inférieure 22' du boîtier 1' du répartiteur 1 et à solidariser ladite plaque 3 à des sites de fixation de cette partie inférieure 22' et, enfin, à assembler de manière étanche la partie supérieure 22 avec la partie inférieure 22', par exemple par soudage par laser ou par gaz chaud, par collage ou par solidarisation mécanique, pour constituer le boîtier 1' du répartiteur 1.

## Revendications

1. Répartiteur ou collecteur d'admission d'air suralimenté pour moteur à combustion interne, comprenant un échangeur (2) de chaleur dont le corps (2') a une forme générale parallélépipédique, qui est monté dans le boîtier (1') dudit répartiteur (1) et qui est destiné à être exposé au flux gazeux (F) traversant ledit boîtier (1'),
ledit échangeur (2) comportant ou étant solidaire d'une plaque ou d'une traverse (3) de support et de fixation, rapportée sur ou formant une face (4) du corps (2') de l'échangeur (2) et assurant son montage rigide dans ce boîtier (1'),
ledit échangeur (2) étant positionné dans ledit boîtier (1') avec formation d'un volume interstitiel (5) entre eux, entourant sensiblement le corps (2') dudit échangeur (2), et des moyens (6, 7) d'étanchéité périphériques étant rapportés sur le corps (2') de l'échangeur (2) et sur la plaque ou traverse de support et de fixation (3) de manière à former une barrière étanche circonférentielle sensiblement continue entre ces derniers et le boîtier (1') du répartiteur (1), divisant périphériquement le volume interstitiel (5) en deux selon un plan (P) sensiblement perpendiculaire à la direction de circulation du flux gazeux (F) traversant ledit échangeur (2),
le plan (P) de subdivision du volume interstitiel (5) étant distinct du plan principal de la plaque ou de la traverse de support et de fixation (3), et avantageusement incliné et préférentiellement sensiblement perpendiculaire par rapport à ce dernier,
répartiteur (1) **caractérisé**
**en ce que** les moyens d'étanchéité périphériques sont constitués par deux composantes complémentaires périphériquement par aboutement (6 et 7) reliées entre elles et solidarisées avec l'échangeur (2), à savoir, une première composante (6) sous la forme d'un joint en U rapporté par prémontage sur les trois faces (4', 4", 4"') du corps (2') de l'échangeur (2) non associées à la traverse ou à la plaque de support et de fixation (3), et une seconde composante (7) sous la forme d'un joint sensiblement linéaire rapporté par prémontage sur la face (4) associée à ladite traverse ou plaque (3), ledit joint sensiblement linéaire (7) étant aboutant et assemblé mécaniquement, au niveau de ses deux extrémités longitudinales opposées (7', 7"), avec les extrémités libres (9) des deux branches (8, 8') du joint en U (6),
**en ce que** les deux joints (6 et 7) sont assemblés mutuellement, au niveau de leur deux zones de liaisonnement, par des moyens complémentaires d'assemblage (10, 11), coopérants entre eux par engagement mécanique avec enclenchement, clippage ou verrouillage élastique, et,
**en ce que** les deux joints (6 et 7) formant les deux composantes des moyens d'étanchéité périphériques sont également reliées mécaniquement à la traverse ou plaque de support et de fixation (3).

2. Répartiteur selon la revendication 1, **caractérisé en ce que** le joint en U (6) comporte, au niveau des extrémités libres (9) des deux branches (8, 8') du corps (6') en U, des crans, des crochets, des harpons ou des formations proéminentes accrochantes analogues (10), et **en ce que** le joint linéaire (7) comporte à ses deux extrémités opposées (7' et 7") des sites d'accrochage (11) latéralement saillants, en particulier des anses, des œillets ou des formations ajourées analogues, aptes et destinés à recevoir les formations proéminentes (10) des extrémités (9) du joint en U (6) pour réaliser par coopération mutuelle des liaisons mécaniques verrouillées.

3. Répartiteur selon la revendication 1 ou 2, **caractérisé en ce que** les deux joints (6 et 7) formant les deux composantes des moyens d'étanchéité périphériques sont reliées mécaniquement à la traverse ou plaque de support et de fixation (3) au niveau de leurs extrémités (7, 7", 9) mutuellement assemblées, le joint en U (6) étant maintenu en appui sous pression contre les faces (4', 4", 4"') du corps (2) de l'échangeur (2) par le biais de cette liaison.

4. Répartiteur selon les revendications 2 et 3, **caractérisé en ce que** la traverse ou plaque de support et de fixation (3) comporte des formations ajourées (12), saillantes latéralement et coïncidentes avec les formations ajourées (11) des extrémités opposées (7' et 7") du joint linéaire (7), telles que des anses, des œillets ou analogues, les formations proéminentes accrochantes (10) des extrémités (9) des branches (8, 8') du joint en U (6) venant en engagement par emboîtement traversant et avec verrouillage par enclenchement, clippage ou déformation élastique, avec les formations ajourées (11 et 12) superposées précitées, le joint linéaire (7) étant ainsi pressé contre la traverse ou la plaque (3) au moins au niveau et à proximité desdites formations ajourées superposées (11 et 12).

5. Répartiteur selon l'une quelconque des revendications 1 à 4, **caractérisé en ce que** le corps (2') de l'échangeur (2) est pourvu, sur au moins une de ses faces extérieures concernées (4', 4", 4"'), de moyens (13, 13') de calage et/ou de maintien pour le joint en U (6), tels que par exemple des languettes ou analogues.

6. Répartiteur selon l'une quelconque des revendications 1 à 5, **caractérisé en ce que** la traverse ou la plaque de support et de fixation (3), d'une part, et le joint linéaire (7), d'autre part, sont pourvus de moyens (14, 14') mutuellement coopérants d'indexation, et éventuellement de solidarisation, tels que par exemple des couples [ergot (14) / orifice borgne (14')].

7. Répartiteur selon l'une quelconque des revendications 1 à 6, **caractérisé en ce que** les bords terminaux (9') des extrémités libres (9) des branches (8, 8') du joint en U (6) sont situées au-delà de la face (4) de la plaque ou traverse de support et de fixation (3) portant le joint linéaire (7) et se raccordent par aboutement avec les extrémités opposées (7', 7") dudit joint linéaire (7).

8. Répartiteur selon l'une quelconque des revendications 1 à 7, **caractérisé, en ce que** chacun des trois segments constitutifs (8, 8', 8"') du joint en U (6) est constitué, vu en coupe transversale, d'une part, d'une première partie (15) venant en appui sous pression sur la face (4', 4", 4'") correspondante en regard du corps (2') de l'échangeur (2) et comportant deux ailes longitudinales (15' et 15") mutuellement divergentes, préférentiellement arquées ou courbes en section transversales, et formant avec lesdites faces (4', 4", 4"') des portions de canaux (16) et, d'autre part, une seconde partie (17) venant en appui sur la paroi interne (1") du boîtier (1') de l'échangeur (1) et comportant une formation flexible longitudinale de contact (17') coopérant de manière étanche avec une portion de surface plane, une rainure (18) ou des nervures (18') de ladite paroi interne (1").

9. Répartiteur selon l'une quelconque des revendications 1 à 8, **caractérisé en ce que** le joint en U (6) comporte, au niveau des deux coins reliant deux à deux les trois segments constitutifs (8, 8', 8") de son corps (2'), des lèvres latérales saillantes et souples (19), en forme de cornières, venant en appui intime sur le coin respectivement correspondant du corps (2') de l'échangeur (2).

10. Répartiteur selon l'une quelconque des revendications 1 à 9, **caractérisé en ce que** le corps du joint linéaire (7) est constitué, d'une part, d'une première partie (20) venant en appui sous pression sur la paroi interne (1") du corps (1') du boîtier (1) et comportant deux ailes longitudinales mutuellement divergentes (20' et 20"), préférentiellement arquées ou courbes en section transversale, et formant avec ladite paroi interne (1") une portion de canal (16'), et, d'autre part, une seconde partie plane (21) en contact surfacique avec la traverse ou la plaque de support et de fixation (3).

11. Répartiteur selon la revendication 8 et la revendication 10, **caractérisé en ce que** les extrémités libres (9) des branches (8 et 8') du corps (6') du joint en U (6) obturent sensiblement les ouvertures opposées de la portion de canal (16') formée par la coopération du joint linéaire (7) avec la paroi interne (1") du boîtier (1') du répartiteur (1), les bords terminaux (9') desdites extrémités libres (9) venant en appui sur ladite paroi interne (1").

12. Répartiteur selon l'une quelconque des revendications 1 à 11, **caractérisé en ce que** le corps (6') du joint en U (6) est réalisé en un matériau plus flexible, par exemple du thermoplastique élastomère, que le matériau constitutif du joint linéaire (7), par exemple en polyamide 66 non chargé.

13. Répartiteur selon l'une quelconque des revendications 1 à 12, **caractérisé en ce que** le boîtier (1') est constitué de deux parties constitutives complémentaires (22 et 22'), à savoir une partie supérieure (22) et une partie inférieure (22') assemblées au niveau de bords respectifs coopérants, définissant un plan d'assemblage (PA) incliné par rapport au plan de subdivision (P), préférentiellement perpendiculaire à ce dernier, la partie inférieure de boîtier (22') comportant des sites de fixation pour la plaque ou la traverse de support et de fixation (3).

14. Répartiteur selon l'une quelconque des revendications 1 à 13, **caractérisé en ce que** le boîtier (1') est réalisé en matériau plastique, préférentiellement par assemblage étanche de deux parties (22 et 22') en forme de demi-coques en matériau thermoplastique.

15. Véhicule automobile à moteur à combustion interne suralimenté, comprenant ou non un circuit de recirculation des gaz EGR et comportant un système d'admission d'air avec un répartiteur ou collecteur d'admission d'air suralimenté, véhicule **caractérisé en ce que** le répartiteur est un répartiteur (1) selon l'une quelconques des revendications 1 à 14, constituant un module multifonctionnel intégrant dans l'enceinte de son boîtier (1') au moins un échangeur de chaleur (2) dans les tubes, ailettes ou analogue du corps (2') duquel circule l'air suralimenté.

16. Procédé de fabrication d'un répartiteur selon l'une quelconque des revendications 1 à 14, **caractérisé en ce qu'**il consiste à fournir les deux parties constitutives (22 et 22') d'un boîtier (1') de répartiteur (1), un échangeur de chaleur (2) pourvue d'une plaque (3) de support et de fixation, un joint en U (6) et un joint linéaire (7), à monter les deux joints (6 et 7) sur le corps (2') de l'échangeur (2), en verrouillant leur montage et leur assemblage mutuel par engagement mécanique avec enclenchement ou clippage et en reliant mécaniquement ces deux joints (6 et 7) à la traverse ou plaque de support et de fixation (3), de manière à constituer une garniture d'étanchéité périphérique autour dudit corps (2'), à disposer l'échangeur (2) ainsi équipé dans la partie inférieure (22') du boîtier (1') du répartiteur (1) et à solidariser ladite plaque (3) à des sites de fixation de cette partie inférieure (22') et, enfin, à assembler de manière étanche la partie supérieure (22) avec la partie inférieure (22'), par exemple par soudage par laser ou par gaz chaud, par collage ou par solidarisation mécanique, pour constituer le boîtier (1') du répartiteur (1).

## Patentansprüche

1. Ladeluft-Ansaugkrümmer oder -stutzen für Verbrennungsmotor, umfassend einen Wärmetauscher (2), dessen Körper (2') eine quaderförmige allgemeine Form aufweist, der im Gehäuse (1') des Krümmers (1) angebracht ist und der dazu bestimmt ist, dem Gasstrom (F) ausgesetzt zu sein, der das Gehäuse (1') durchströmt, wobei der Tauscher (2) eine Träger- und Befestigungsplatte oder -traverse (3) aufweist oder fest damit verbunden ist, die auf den Körper (2') des Tauschers (2) aufgesetzt ist oder eine Seite (4) davon bildet und dessen starre Befestigung in diesem Gehäuse (1') sicherstellt,
wobei der Tauscher (2) in dem Gehäuse (1') mit Bildung eines Zwischenvolumens (5) dazwischen positioniert ist, das den Körper (2') des Tauschers (2) im Wesentlichen umgibt, und periphere Dichtungsmittel (6, 7) so auf dem Körper (2') des Tauschers (2) und auf der Träger- und Befestigungsplatte oder -traverse (3) aufgesetzt sind, dass sie eine dichte Umfangsbarriere bilden, die zwischen letzteren und dem Gehäuse (1') des Krümmers (1) im Wesentlichen durchgehend ist, die das Zwischenvolumen (5) gemäß einer Ebene (P) peripher zweiteilt, die im Wesentlichen senkrecht zur Strömungsrichtung des Gasstroms (F) verläuft, der den Tauscher (2) durchströmt, wobei die Unterteilungsebene (P) des Zwischenvolumens (5) von der Hauptebene der Träger- und Befestigungsplatte oder -traverse (3) verschieden und vorteilhafterweise geneigt ist und vorzugsweise im Wesentlichen senkrecht zu letzterer verläuft,
Krümmer (1) **dadurch gekennzeichnet, dass** die peripheren Dichtungsmittel von zwei Komponenten gebildet sind, die durch Zusammenfügung peripher komplementär sind (6 und 7), die miteinander verbunden und mit dem Tauscher (2) fest verbunden sind, und zwar einer ersten Komponente (6) in Form einer U-förmigen Dichtung, die durch Vormontage auf den drei Seiten (4', 4", 4"') des Körpers (2') des Tauschers (2) aufgesetzt ist, die nicht mit der Träger- und Befestigungstraverse oder -platte (3) in Verbindung stehen, und einer zweiten Komponente (7) in Form einer im Wesentlichen linearen Dichtung, die durch Vormontage auf der Seite (4) aufgesetzt ist, die mit der Traverse oder Platte (3) in Verbindung steht, wobei die im Wesentlichen lineare Dichtung (7) anstößt und an ihren entgegengesetzten Längsenden (7', 7") mit den freien Enden (9) der zwei Schenkel (8, 8') der U-förmigen Dichtung (6) mechanisch zusammengefügt ist, dadurch, dass die zwei Dichtungen (6 und 7) an ihren zwei Verbindungsbereichen durch komplementäre Fügemittel (10, 11) aneinandergefügt sind, die durch mechanischen Eingriff mit Einrasten, Aufrasten oder elastischer Verriegelung miteinander zusammenwirken, und
dadurch, dass die zwei Dichtungen (6 und 7), die die zwei Komponenten der peripheren Dichtungsmittel bilden, ebenfalls mit der Träger- und Befestigungstraverse oder -platte (3) mechanisch verbunden sind.

2. Krümmer nach Anspruch 1, **dadurch gekennzeichnet, dass** die U-förmige Dichtung (6) an ihren freien Enden (9) der zwei Schenkel (8, 8') des U-förmigen Körpers (6') Rasten, Haken, Harpunen oder analoge verhakende vorstehende Ausbildungen (10) aufweist, und dadurch, dass die lineare Dichtung (7) an ihren zwei entgegengesetzten Enden (7' und 7") seitlich abstehende Verhakungsstellen (11), insbesondere Henkel, Ösen oder analoge Ausbildungen mit Öffnungen aufweist, die geeignet und dazu bestimmt sind, die vorstehenden Ausbildungen (10) der Enden (9) der U-förmigen Dichtung (6) aufzunehmen, um durch gegenseitige Zusammenwirkung verriegelte mechanische Verbindungen herzustellen.

3. Krümmer nach Anspruch 1 oder 2, **dadurch gekennzeichnet, dass** die zwei Dichtungen (6 und 7), die die zwei Komponenten der peripheren Dichtungsmittel bilden, an ihren Enden (7, 7", 9), die aneinandergefügt sind, mechanisch mit der Träger- und Befestigungstraverse oder -platte (3) verbunden sind, wobei die U-förmige Dichtung (6) durch diese Verbindung unter Druck gegen die Seiten (4', 4", 4"') des Körpers (2) des Tauschers (2) in Anlage gehalten wird.

4. Krümmer nach den Ansprüchen 2 und 3, **dadurch gekennzeichnet, dass** die Träger- und Befestigungstraverse oder -platte (3) Ausbildungen mit Öffnungen (12) aufweist, die seitlich abstehen und sich mit den Ausbildungen mit Öffnungen (11) der entgegengesetzten Enden (7' und 7") der linearen Dichtung (7), wie beispielsweise Henkeln, Ösen oder dergleichen, decken, wobei die verhakenden vorstehenden Ausbildungen (10) der Enden (9) der Schenkel (8, 8') der U-förmigen Dichtung (6) durch Durchstecken und mit Verriegelung durch Einrasten, Aufrasten oder elastischer Verformung mit den vorgenannten übereinander angeordneten Ausbildungen mit Öffnungen (11 und 12) in Eingriff treten, wobei die lineare Dichtung (7) so wenigstens an den und in der Nähe der übereinander angeordneten Ausbildungen mit Öffnungen (11 und 12) gegen die Traverse oder Platte (3) gepresst wird.

5. Krümmer nach einem der Ansprüche 1 bis 4, **dadurch gekennzeichnet, dass** der Körper (2') des Tauschers (2) wenigstens auf einer seiner betroffenen Außenseiten (4', 4", 4"') mit Keil- und/oder Haltemitteln (13, 13') für die U-förmige Dichtung (6) versehen ist, wie beispielsweise Zungen oder dergleichen.

6. Krümmer nach einem der Ansprüche 1 bis 5, **dadurch gekennzeichnet, dass** die Träger- und Befestigungstraverse oder -platte (3) einerseits und die lineare Dichtung (7) andererseits mit gegenseitig zusammenwirkenden Mitteln (14, 14') zur Indexierung und eventuell festen Verbindung versehen sind, wie beispielsweise [Stift (14) / Blindloch (14')]-Paaren.

7. Krümmer nach einem der Ansprüche 1 bis 6, **dadurch gekennzeichnet, dass** sich die Abschlussränder (9') der freien Enden (9) der Schenkel (8, 8') der U-förmigen Dichtung (6) jenseits der Seite (4) der Träger- und Befestigungsplatte oder -traverse (3) befinden, die die lineare Dichtung (7) trägt, und durch Zusammenfügung mit den entgegengesetzten Enden (7', 7") der linearen Dichtung (7) verbunden sind.

8. Krümmer nach einem der Ansprüche 1 bis 7, **dadurch gekennzeichnet, dass** jedes der drei bildenden Segmente (8, 8', 8'") der U-förmigen Dichtung (6) im Querschnitt betrachtet einerseits von einem ersten Abschnitt (15), der unter Druck auf der entsprechenden Seite (4', 4", 4'") gegenüber dem Körper (2') des Tauschers (2) in Anlage kommt und zwei Längsflügel (15' und 15") aufweist, die auseinander gehen, die in den Querschnitten vorzugsweise gebogen oder gekrümmt sind und mit den Seiten (4', 4", 4"') Teilbereiche von Kanälen (16) bilden, und andererseits einem zweiten Abschnitt (17), der auf der Innenwand (1") des Gehäuses (1') des Tauschers (1) in Anlage kommt und eine flexible Kontakt-Längsausbildung (17') aufweist, die dichtend mit einem ebenen Oberflächenteilbereich, einer Nut (18) oder Rippen (18') der Innenwand (1") zusammenwirkt.

9. Krümmer nach einem der Ansprüche 1 bis 8, **dadurch gekennzeichnet, dass** die U-förmige Dichtung (6) an den zwei Ecken, die die drei bildenden Segmente (8, 8', 8") seines Körpers (2') paarweise verbinden, abstehende und weiche Seitenlippen (19) in Form von Winkeln aufweist, die auf der jeweiligen entsprechenden Ecke des Körpers (2') des Tauschers (2) in enge Anlage kommen.

10. Krümmer nach einem der Ansprüche 1 bis 9, **dadurch gekennzeichnet, dass** der Körper der linearen Dichtung (7) einerseits von einem ersten Abschnitt (20), der unter Druck auf der Innenwand (1") des Körpers (1') des Gehäuses (1) in Anlage kommt und zwei Längsflügel aufweist, die auseinander gehen (20' und 20"), die im Querschnitt vorzugsweise gebogen oder gekrümmt sind und mit der Innenwand (1") einen Kanalteilbereich (16') bilden, und andererseits einem zweiten, flachen Abschnitt (21) in Flächenkontakt mit der Träger- und Befestigungstraverse oder -platte (3) gebildet ist.

11. Krümmer nach Anspruch 8 und 10, **dadurch gekennzeichnet, dass** die freien Enden (9) der Schenkel (8 und 8') des Körpers (6') der U-förmigen Dichtung (6) die entgegengesetzten Öffnungen des Kanalteilbereichs (16'), der durch die Zusammenwirkung der linearen Dichtung (7) mit der Innenwand (1") des Gehäuses (1') des Krümmers (1) gebildet ist, im Wesentlichen verschließen, wobei die Abschlussränder (9') der freien Enden (9) auf der Innenwand (1") in Anlage kommen.

12. Krümmer nach einem der Ansprüche 1 bis 11, **dadurch gekennzeichnet, dass** der Körper (6') der U-förmigen Dichtung (6) aus einem flexibleren, zum Beispiel elastomeren thermoplastischen Material hergestellt ist als das bildende Material der linearen Dichtung (7), zum Beispiel aus ungefülltem Polyamid 66.

13. Krümmer nach einem der Ansprüche 1 bis 12, **dadurch gekennzeichnet, dass** das Gehäuse (1') von zwei komplementären bildenden Abschnitten (22 und 22') gebildet ist, und zwar einem oberen Abschnitt (22) und einem unteren Abschnitt (22'), die an jeweiligen zusammenwirkenden Rändern zusammengefügt sind, die eine Fügeebene (PA) definieren, die bezogen auf die Unterteilungsebene (P) geneigt ist, vorzugsweise senkrecht zu dieser verläuft, wobei der untere Abschnitt des Gehäuses (22') Befestigungsstellen für die Träger- und Befestigungsplatte oder -traverse (3) aufweist.

14. Krümmer nach einem der Ansprüche 1 bis 13, **dadurch gekennzeichnet, dass** das Gehäuse (1') aus Kunststoff hergestellt ist, vorzugsweise durch dichtes Zusammenfügen zweier Abschnitte (22 und 22') in Form von Halbschalen aus thermoplastischem Material.

15. Kraftfahrzeug mit aufgeladenem Verbrennungsmotor, umfassend einen Kreislauf zur Rückführung der AGR-Gase oder nicht und aufweisend ein Luftansaugsystem mit einem Ladeluft-Ansaugkrümmer oder -stutzen, wobei das Fahrzeug **dadurch gekennzeichnet ist, dass** der Krümmer ein Krümmer (1) nach einem der Ansprüche 1 bis 14 ist, der ein multifunktionelles Modul bildet, das innerhalb seines Gehäuses (1') wenigstens einen Wärmetauscher (2) enthält, wobei in den Rohren, Rippen oder dergleichen dessen Körpers (2') die Ladeluft strömt.

16. Verfahren zur Herstellung eines Krümmers nach einem der Ansprüche 1 bis 14, **dadurch gekennzeichnet, dass** es darin besteht, zwei bildende Abschnitte (22 und 22') eines Gehäuses (1') eines Krümmers (1), einen Wärmetauscher (2), der mit einer Träger- und Befestigungsplatte (3) versehen ist, eine U-förmige Dichtung (6) und eine lineare Dichtung (7) bereitzustellen, die zwei Dichtungen (6 und 7) auf dem Körper (2') des Wärmetauschers (2) anzubringen, indem ihre Anbringung und Aneinanderfügung durch mechanischen Eingriff mit Einrasten oder Aufrasten verriegelt und diese zwei Dichtungen (6 und 7) mechanisch mit der Träger- und Befestigungstraverse oder -platte (3) verbunden werden, so dass eine umlaufende Abdichtung um den Körper (2') gebildet wird, den so ausgerüsteten Tauscher (2) im unteren Abschnitt (22') des Gehäuses (1') des Krümmers (1) anzuordnen und die Platte (3) an Befestigungsstellen dieses unteren Abschnitts (22') fest zu verbinden, und schließlich den oberen Abschnitt (22) dicht mit dem unteren Abschnitt (22') zusammenzufügen, zum Beispiel durch Laserschweißen oder Heiß-Gas-Schweißen, Kleben oder festes mechanisches Verbinden, um das Gehäuse (1') des Krümmers (1) zu bilden.

## Claims

1. Forced-induction air intake manifold or collector for an internal combustion engine, comprising a heat exchanger (2) of which the body (2') has a parallelepipedal overall shape, which is mounted in the casing (1') of said manifold (1) and is intended to be exposed to the gas flow (F) passing through said casing (1'),
said exchanger (2) having or being secured to a support and fastening plate or crossmember (3), which is attached to or forms a face (4) of the body (2') of the exchanger (2) and ensures rigid mounting of the exchanger in this casing (1'),
said exchanger (2) being positioned in said casing (1') with formation of an interstitial volume (5) between them that substantially surrounds the body (2') of said exchanger (2), and peripheral sealing means (6, 7) being attached to the body (2') of the exchanger (2) and to the support and fastening plate or crossmember (3) so as to form a substantially continuous circumferential sealed barrier between these and the casing (1') of the manifold (1), peripherally dividing the interstitial volume (5) in two along a plane (P) that is substantially perpendicular to the direction of circulation of the gas flow (F) passing though said exchanger (2),
the plane (P) of subdivision of the interstitial volume (5) being separate from the main plane of the support and fastening plate or crossmember (3), and advantageously being inclined and preferentially substantially perpendicular with respect to the main plane,
which manifold (1) is **characterized**
**in that** the peripheral sealing means are constituted by two components that complement one another peripherally by butting together (6 and 7), which are connected to one another and are secured to the exchanger (2), these namely being a first component (6) in the form of a U-shaped seal that is attached by premounting to the three faces (4', 4", 4'") of the body (2') of the exchanger (2) that are not associated with the support and fastening crossmember or plate (3), and a second component (7) in the form of a substantially linear seal that is attached by premounting to the face (4) that is associated with said crossmember or plate (3), said substantially linear seal (7) being, at its two opposite longitudinal ends (7', 7"), butted-together with, and mechanically joined to, the free ends (9) of the two legs (8, 8') of the U-shaped seal (6),
**in that** the two seals (6 and 7) are joined together, in their two connection zones, by complementary joining means (10, 11) that cooperate with one another by mechanical engagement with interlocking, clipping or elastic locking, and
**in that** the two seals (6 and 7) forming the two components of the peripheral sealing means are also mechanically connected to the support and fastening crossmember or plate (3).

2. Manifold according to Claim 1, **characterized in that** the U-shaped seal (6) has, at the free ends (9) of the two legs (8, 8') of the U-shaped body (6'), catches, hooks, barbs or similar protruding coupling formations (10), and **in that** the linear seal (7) has at its two opposite ends (7' and 7") laterally projecting coupling sites (11), in particular loops, eyelets or similar perforated formations that are able and intended to receive the protruding formations (10) of the ends (9) of the U-shaped seal (6) in order by mutual cooperation to realize locked mechanical connections.

3. Manifold according to Claim 1 or 2, **characterized in that** the two seals (6 and 7) that form the two components of the peripheral sealing means are mechanically connected to the support and fastening crossmember or plate (3) at their joined-together ends (7, 7", 9), the U-shaped seal (6) being kept bearing under pressure against the faces (4', 4", 4'") of the body (2) of the exchanger (2) via this connection.

4. Manifold according to Claims 2 and 3, **characterized in that** the support and fastening crossmember or plate (3) has perforated formations (12) that project laterally and are coincident with the perforated formations (11) of the opposite ends (7' and 7") of the linear seal (7), such as loops, eyelets or similar, the protruding coupling formations (10) of the ends (9) of the legs (8, 8') of the U-shaped seal (6) engaging, by through-interconnection with locking by interlocking, clipping or elastic deformation, with the aforementioned superposed perforated formations (11 and 12), the linear seal (7) thus being pressed against the crossmember or plate (3) at least at and in the vicinity of said superposed perforated formations (11 and 12).

5. Manifold according to any one of Claims 1 to 4, **characterized in that** the body (2') of the exchanger (2) is provided, on at least one of its outer faces (4', 4", 4'") in question, with wedging and/or holding means (13, 13') for the U-shaped seal (6), such as for example tabs or similar.

6. Manifold according to any one of Claims 1 to 5, **characterized in that** the support and fastening crossmember or plate (3), on the one hand, and the linear seal (7), on the other hand, are provided with mutually cooperating indexing and possibly securing means (14, 14'), such as for example [lug (14)/blind orifice (14')] pairs.

7. Manifold according to any one of Claims 1 to 6, **characterized in that** the terminal edges (9') of the free ends (9) of the legs (8, 8') of the U-shaped seal (6) are situated beyond the face (4) of the support and fastening plate or crossmember (3) that bears the linear seal (7), and are connected by butt-joining to the opposite ends (7', 7") of said linear seal (7).

8. Manifold according to any one of Claims 1 to 7, **characterized in that** each of the three constituent segments (8, 8', 8'") of the U-shaped seal (6) is, viewed in cross section, made up of, on the one hand, a first part (15) bearing under pressure on the corresponding facing face (4', 4", 4'") of the body (2') of the exchanger (2) and having two mutually divergent longitudinal wings (15' and 15"), which are preferentially arcuate or curved in cross section, forming channel portions (16) with said faces (4', 4", 4'"), and, on the other hand, a second part (17) bearing on the internal wall (1") of the casing (1') of the exchanger (1) and having a flexible longitudinal contact formation (17') cooperating in a sealed manner with a planar surface portion, a groove (18) or ribs (18') of said internal wall (1").

9. Manifold according to any one of Claims 1 to 8, **characterized in that** the U-shaped seal (6) has, at the two corners connecting the three constituent segments (8, 8', 8") of its body (2') in pairs, flexible and projecting lateral lips (19), in the shape of angle brackets, bearing closely on the respectively corresponding corner of the body (2') of the exchanger (2).

10. Manifold according to any one of Claims 1 to 9, **characterized in that** the body of the linear seal (7) is made up of, on the one hand, a first part (20) bearing under pressure on the internal wall (1") of the body (1') of the casing (1) and having two mutually divergent longitudinal wings (20' and 20"), which are preferentially arcuate or curved in cross section, forming a channel portion (16') with said internal wall (1"), and, on the other hand, a planar second part (21) in surface contact with the support and fastening crossmember or plate (3).

11. Manifold according to Claim 8 and Claim 10, **characterized in that** the free ends (9) of the legs (8 and 8') of the body (6') of the U-shaped seal (6) substantially close off the opposite openings of the channel portion (16') that is formed by the cooperation of the linear seal (7) with the internal wall (1") of the casing (1') of the manifold (1), the terminal edges (9') of said free ends (9) bearing on said internal wall (1").

12. Manifold according to any one of Claims 1 to 11, **characterized in that** the body (6') of the U-shaped seal (6) is made from a material, for example thermoplastic elastomer, which is more flexible than the constituent material of the linear seal (7), and is for example made from polyamide 66 without filler.

13. Manifold according to any one of Claims 1 to 12, **characterized in that** the casing (1') is made up of two complementary constituent parts (22 and 22'), namely an upper part (22) and a lower part (22') which are joined at respective cooperating edges, defining a joining plane (PA) that is inclined with respect to the subdivision plane (P), preferentially perpendicular to the latter, the lower casing part (22') having fastening sites for the support and fastening plate or crossmember (3).

14. Manifold according to any one of Claims 1 to 13, **characterized in that** the casing (1') is made from a plastic material, preferentially by sealed joining of two parts (22 and 22') in the form of half-shells made from a thermoplastic material.

15. Motor vehicle with a forced-induction internal combustion engine, which may or may not comprise an EGR gas recirculation circuit and having an air intake system with a forced-induction air intake manifold or collector, which vehicle is **characterized in that** the manifold is a manifold (1) according to any one of Claims 1 to 14, constituting a multifunctional module that incorporates in the enclosure of its casing (1') at least one heat exchanger (2), in the tubes, fins or similar of the body (2') of which the forced-induction air circulates.

16. Method for manufacturing a manifold according to any one of Claims 1 to 14, **characterized in that** it consists in providing the two constituent parts (22 and 22') of a manifold (1) casing (1'), a heat exchanger (2) provided with a support and fastening plate (3), a U-shaped seal (6) and a linear seal (7), in mounting the two seals (6 and 7) on the body (2') of the exchanger (2), locking their mounting and their joining together by mechanical engagement with interlocking or clipping and mechanically connecting these two seals (6 and 7) to the support and fastening crossmember or plate (3), so as to constitute a peripheral sealing gasket around said body (2'), in disposing the exchanger (2) thus equipped in the lower part (22') of the casing (1') of the manifold (1) and in securing said plate (3) to fastening sites of this lower part (22') and, finally, in joining the upper part (22) to the lower part (22') in a sealed manner, for example by laser or hot-gas welding, by adhesive bonding or by mechanical fastening, in order to constitute the casing (1') of the manifold (1).
